# EUROPEAN PATENT APPLICATION

(11) **EP 4 152 688 A1**
(43) Date of publication of application: **22.03.2023**
(21) Application number: 21196850.8
(22) Date of filing: 15.09.2021
(51) Int. Cl.: H04L 9/40, H04W 12/03, H04W 12/00

(54) **MEDICAL DEVICE, SYSTEM COMPRISING SUCH MEDICAL DEVICE AND OPERATION METHOD FOR SAME**

(71) Applicant: BIOTRONIK SE & Co. KG, 12359 Berlin (DE)
(72) Inventor: DEUTSCHMANN, Hendrik, 12435 Berlin (DE); REICHERT, Karl, 13351 Berlin (DE); KÖPPEL, Jürgen, 85599 Parsdorf (DE); MÜLLER, Jens, 14195 Berlin (DE)
(74) Representative: Biotronik Corporate Services SE

(57) **Abstract**

The invention is directed to a medical device (10) comprising a processing unit (12) and a communication unit (14) and a system comprising the medical device and an external device (30). In order to decrease attack vectors and make man-in-the-middle attacks less likely the communication unit of the medical device is configured to establish a secure first communication channel (21) to a communication unit (34) of an external device (30), and the processing unit is configured to establish a second communication channel (22) having end-to-end-encryption ensuring authenticity and confidentiality to the communication unit of the external device via the communication unit of the medical device. The invention is further directed to operation methods of the medical device and the system as well as a computer program product and a computer readable data carrier.

## Description

The invention is directed to a medical device, for example an implantable medical device (IMD), a method of operating such medical device, a system comprising the medical device and an external device, and a method of operating such system. The invention is further directed to respective computer program product and a respective computer readable data carrier. The computer program product may be a software routine, e.g. related to hardware support means within the medical device and/or the external device.

Usually, a medical device, in particular an IMD, is configured to monitor the health status of a patient and/or configured to deliver a therapy signal to the patient.

Active and passive medical devices, e.g. IMDs, for example, a pacemaker (with leads), a sensor implant like a heart rhythm monitor, an Implantable Leadless Pacer (ILP), an Implantable Leadless Pressure Sensor (ILPS), an Implantable Cardiac Defibrillator (ICD) or a Subcutaneous Implantable Cardiac Defibrillator (i.e., S-ICD), contain sensors that collect physiological signals to monitor the health status of the patient and transmit them as data to an external device, e.g. to a health care practitioner (HCP) or patient device or to a remote server using the external device. The data collected from these various or any such sensors can include, but are not limited to, ECG, impedance, activity, posture, heart sounds, pressure, respiration, and other data. Active IMDs, (e.g., pacemaker, ILP, ICD, or S-ICD) may provide therapy output to the patient, for example electrical stimulation within a heart chamber (e.g., atrium or ventricle).

Usually, such medical devices comprise a processing unit for data processing and a communication unit configured to bi-directionally exchange messages with the external device if, for example, implanted within the body of the patient. The external device, possibly using its own communication unit, is configured for bi-directionally exchange messages with the communication unit of the medical device. The external device may be a separate device connected to a computer (in some cases called programmer) or may be a module integrated within a remote device such as a computer. The external device receives data from the medical device as indicated above and/or produces and sends messages to the communication unit of the medical device in form of requests, for example for receiving data concerning the health status of the patient or medical device status from the medical device or for programming, e.g. in order to configure the medical device to apply an appropriate therapy to the patient.

Existing medical devices have single channel communication with encryption from a separate communication unit to the communication partner (e.g. the external device), wherein the encryption is an end-to-end-encryption or a hop-to-hop-encryption which is not end-to-end and prone to man-in-the-middle attacks. A separate communication unit is mainly introduced to ease burden of communication on a main processing unit, to make more computational power available for medical purposes and as mitigation measure for a safe medical operation mode.

However, a separate communication unit is the first line of defense only. If a communication unit cannot inspect the data because of single channel end-to-end encryption, they can neither help the main processing unit with load balancing nor defend it against denial-of-service attacks. If hop-to-hop-encryption instead of end-to-end-encryption is used, then an attacker who gains control over the communication unit can see/alter the data sent over the communication unit (all data, i.e. medical and non-medical data).

Document WO 2017/027729 A2 describes a system including an IMD, a communication platform and trusted authority service provider, wherein the communication platform in system is implemented, for example, as at least two separate portions each of which comprise a separate IMD application. The first platform portion facilitates a first component of first secure communications between IMD and trusted authority service provider in cooperation with a first security mechanism (e.g. security elements), while second platform portion facilitates a second component of first secure communications between IMD and TA service provider in cooperation with a second security mechanism (e.g. security elements). These different pathways can be referred to as two different channels, such as first channel and a second channel which operate independently from each other. Such system

Accordingly, it is desirable to provide a medical device and a communication system as well as a respective operating method that provides greater security in communication than the known systems/methods.

The above problem is solved by a medical device with the features of claim 1, by a system with the features of claim 10, respective operation method with the features of claim 11 and claim 12, by a computer program product with the features of claim 14, and by a computer readable data carrier with the features of claim 15. The computer program product may be a software routine and/or related hardware support means with the medical device and external device.

In particular, the problem is solved by a medical device comprising a processing unit and a communication unit, wherein the communication unit is configured to establish a secure first communication channel to a communication unit of an external device, wherein the processing unit is configured to establish a second communication channel having end-to-end-encryption ensuring authenticity and confidentiality to the communication unit of the external device via the communication unit of the medical device, wherein the second communication channel is provided within a first communication channel along the first section of the second communication channel extending from the communication unit of the medical device to the communication unit of the external device.

The medical device comprises a processing unit for data processing and a communication unit (e.g. having an antenna or a coil connected to an appropriate communication management capability) for receiving messages (i.e. communication signals) from and/or transmitting messages to the external device (i.e. a sender, receiver and/or transceiver). The communication unit is electrically connected to the processing unit but both units are separate units. In one embodiment the communication unit provides bidirectional communication. The request messages are instruction or command requests sent by the external device to the medical device. The messages sent by the communication unit of the medical device to the external device serve as response messages and may contain data measured by the medical device and/or derived from a therapy provided by the medical device. Generally, messages are strings of bits embedded in a syntax and semantics system defined as part of a communication protocol expressed in and interpreted by well-defined algorithms and data structures. The request messages received by the medical device's communication unit are relayed to the processing unit for data processing. Analogously, the processing unit produces the content of the signals/messages which are subsequently relayed to the communication unit for sending to the external device as response messages.

With regard to the invention, each processing unit (also referred to as main unit) is regarded as a functional unit of the medical device, the external device, and/or the computer, that interprets and executes instructions comprising an instruction control unit and an arithmetic and logic unit. The (remote) computer or external device is a functional unit that can perform substantial computations, including numerous arithmetic operations and logic operations without human intervention, such as, for example, a personal mobile device (PMD), a desktop computer, a server computer, clusters/warehouse scale computer or embedded system.

The medical device may comprise further modules such as a memory module for storing data, a power supply inclusive of battery support or otherwise, at least one sensor for retrieving physiological signals from the patient and/or a signal generator for generating and administering, for example, electrical or electromagnetic therapy signals. The communication unit, the memory module, the power supply, the at least one sensor and/or the signal generator may be electrically connected to the processing unit.

The memory module of the medical device may include any volatile, non-volatile, magnetic, electrical media, or otherwise such as a random access memory (RAM), read-only memory (ROM), non-volatile RAM (NVRAM), electrically-erasable programmable ROM (EEPROM), flash memory, or any other memory storage type.

The external device is a device separate from the medical device which may be located at least partially extracorporeally and, in one embodiment, may have a processing unit and may be wirelessly or by-wire connected to a computer (e.g. HCP device, remote server), another medical device, a mobile phone, or a programmer (if the medical device is no programmer). Alternatively, the external device may form an integrated unit of such computer, another medical device, a mobile phone, or a programmer (if the medical device is no programmer). For bi-directional communication the external device may comprise a communication unit for messages (signals), for example, a coil or antenna. The communication module may comprise or interface with a processing unit, in particular, if it is a module separate from a computer.

The medical device may be an implantable medical device as defined above configured to monitor the health status of a patient and/or configured to deliver a therapy signal to the patient, for example an ILP, an ILPS, an ICD, or a programmer (the latter if the external device is no programmer). A programmer is a device for sending and/or receiving data from an implant which are relevant for the algorithms executed by a processing unit of the implant in order to monitor the health status of the patient and/or deliver a therapy signal to the patient.

Communication of the external device and the medical device, i.e. communication of the communication unit of the external device with the communication unit and processing unit of the medical device may comprise communication over the air (i.e. wireless, without wire), for example in the first section of the second communication channel and in the first communication channel. In contrast, a second section of the communication channel extending from the processing unit to the communication unit of the medical device may be provided by wired media, e.g. a wire or a trace at a circuit board. The communication may use inductive magnetic means, acoustic methods (e.g. ultrasound), and/or acoustic, optical and/or electromagnetic waves, for example Bluetooth, WLAN, ZigBee, NFC, Wibree or WiMAX in the radio frequency region, Ethernet, or IrDA or free-space optical communication (FSO) in the infrared or optical frequency region.

According to the invention, the communication unit of the medical device is configured to establish a secure first communication channel to the communication unit of the external device. This means that a communication connection is established using a known secure communication protocol, for example Transport Layer Securiy (TLS). This provides authenticity and confidentiality to the first communication channel.

Further, within the tunnel of the first communication channel, the processing unit of the medical device is configured to establish the second communication channel having end-to-end-encryption ensuring authenticity and confidentiality to the communication unit of the external device thereby ensuring integrity and confidentiality of transmitted data. The second communication channel is established via the communication unit of the medical device. The second communication channel is further provided within the first communication channel, i.e. wrapped by the first communication channel, along the first section of the second communication channel extending from the communication unit of the medical device to the communication unit of the external device. In one embodiment, the second communication channel is relayed by the communication unit of the medical device in a way that only a protocol layer (OSI model) of the processing unit of the medical device is exposed to the communication unit of the external device. This prevents exploitation of possible vulnerabilities of the protocol stack used by the processing unit.

Accordingly, the communication unit of the medical device and the communication unit of the external device comprise and are configured to use the software of a first communication protocol for the first communication channel. Additionally, the processing unit of the medical device and the communication unit of the external device comprise and are configured to use the software of at least one second communication protocol for the second communication channel, wherein the first communication protocol of the first communication channel and the at least one second communication protocol of the second communication channel are different. This means that the second communication channel is not accessible for the communication unit of the medical device.

This has the advantage, that, if an attacker gains control of the communication unit of the medical device, the attacker cannot access data exchanged between processing unit and external device since it is still secured by the (inner) second communication channel end-to-end. Additionally, the above medical device (and below system) decrease attack vectors and make man-in-the-middle attacks less likely / harder to achieve. Further, a denial-of-service attack would not hit the processing unit of the medical device (where the medical tasks are executed), but only the communication unit. This further allows logical communication links from the processing unit of the medical device (wherein the communication unit works as a proxy) without enlarging attack vectors. It works as a hardware firewall to the processing unit. Adding the (outer) first communication channel is transparent to data source (e.g. the medical device) and data consumer (the external device). This is especially valuable if the end-to-end communication (second communication channel) is proprietary or achieved by SOUP/3rd party (subsystem) software.

In one embodiment, the medical device is configured such that the data encryption of the first communication channel and of the second communication channel use different security means, e.g. different ciphers (Rivest Cipher 5 .. RC5, Advanced Encryption Standard .. AES, Tripple Data Encryption Standard .. 3DES or Rivest-Shamir-Adleman .. RSA) and/or different cipher TLS suites.

In one embodiment, the processing unit and the communication unit of the medical device have different operating systems (e.g. Windows, Linux), different technologies regarding hardware (e.g. desktop, embedded device) and/or different communication stacks (e.g. Windows stack, Linux stack).

If the processing unit and the communication unit have different operating systems, hardware, protocol stacks and use different security mechanisms for the communication channels, the probability of a successful attack on the processing unit is reduced significantly. This means that first an attacker has to break into the (outer) first communication channel (by using a vulnerability on the communication unit) and then has to break into the (inner) second communication channel (by using a vulnerability on the processing unit).

In one embodiment, the communication unit of the medical device is configured to provide load balancing and/or protection against Denial of Service (DoS) attacks and/or intrusion prevention. This is realized using appropriate software in the communication unit, protecting the processing unit from these attacks.

In one embodiment, the communication unit is mechanically connected to the medical device by a detachable connection.

Using this secured first and second communication channels, various application classes may be secured. This includes databases (e.g. SQL, NoSQL) and remote support solutions (e.g. videochat, screen sharing).

The above problem is also solved by a system comprising an external device and a medical device both being a component of the communication system and having the above explained features solve the above problem, as well. In particular, the external device comprises a communication unit which is configured to establish a secure first communication channel to the communication unit of the medical device, wherein the communication unit of the external device is further configured to establish a second communication channel having end-to-end-encryption ensuring authenticity and confidentiality to the processing unit of the medical device via the communication unit of the medical device, wherein the second communication channel is provided within (i.e. through) the first communication channel along a first section of the second communication channel extending from the communication unit of the medical device to the communication unit of the external device. The inventive system has the advantages and further embodiments already described above with regard to the medical device.

Analogously, the above problem is solved by an operation method of a medical device, wherein the medical device comprises a processing unit and a communication unit, comprising the following steps:
- establishing a secure first communication channel (via e.g. TLS) to a communication unit of an external device by the communication unit of the medical device,
- establishing a second communication channel having end-to-end-encryption ensuring authenticity and confidentiality (via e.g. TLS) to the communication unit of the external device via the communication unit of the medical device by the processing unit of the medical device, wherein the second communication channel is provided within the first communication channel along a first section of the second communication channel extending from the communication unit of the medical device to the communication unit of the external device,
- transmitting data from the processing unit of the medical device to the communication unit of the external device using the second communication channel.

Further, the above problem is solved by an operation method of a system comprising a medical device and an external device, wherein the medical device comprises a processing unit and a communication unit and the external device comprises a communication unit, wherein the method comprises the following steps:
- establishing a secure first communication channel (e.g. via TLS) to the communication unit of the medical device by the communication unit of the external device,
- establishing a second communication channel having end-to-end-encryption ensuring authenticity and confidentiality (e.g. via TLS) to the processing unit of the medical device via the communication unit of the medical device by the communication unit of the external device, wherein the second communication channel is provided within a first communication channel along the first section of the second communication channel extending from the communication unit of the external device to the communication unit of the medical device,
- transmitting data from the communication unit of the external device to the processing unit of the medical device using the second communication channel.

In one embodiment of the above methods, data encryption of the first communication channel and of the second communication channel is provided using different security means, e.g. different ciphers and/or different cipher transport layer security (TLS) suites. This has the advantages indicated above.

The embodiments described for the medical device and the system apply to the above methods, as well, causing the analogous advantages. It is referred to above embodiments of the medical device and the system in this regard.

The above method is, for example, realized as a computer program (to be executed at or within the external device and/or the medical device, in particular utilizing their processing units) which is a combination of above and below specified (computer) instructions and data definitions that enable computer hardware or a communication system to perform computational or control functions and/or operations, or which is a syntactic unit that conforms to the rules of a particular programming language and that is composed of declarations and statements or instructions needed for an above and below specified function, task, or problem solution.

Furthermore, a computer program product is disclosed comprising instructions which, when executed by a processing unit, cause the processing unit to perform the steps of the above defined method. Accordingly, a computer readable data carrier storing such computer program product is described.

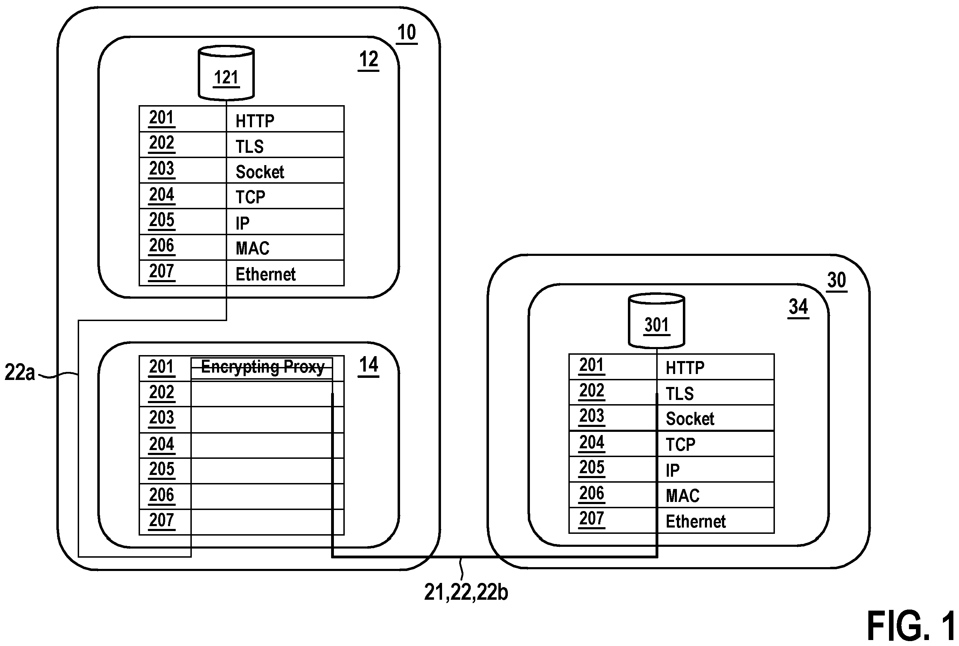

The present invention will now be described in further detail with reference to the accompanying schematic drawing, wherein
- Fig. 1: shows one embodiment of an inventive system.

The inventive system shown in Fig. 1 comprises a medical device, for example a pacemaker 10 and an external device, for example a (non-implanted) computer 30 of an HCP. The pacemaker 10, which is implanted within a patient, comprises a processing unit 10 and a communication unit 14, which are electrically connected but form separate units. The computer 30 comprises a communication unit 34 and may also comprise a separate processing unit (not shown).

In order to exchange data from the pacemaker 10 to the external computer 30, a bidirectional communication connection 20 is established between the communication unit 34 of the external computer 30 and the processing unit 12 of the pacemaker. The communication connection may be established either by the pacemaker 10 or the computer 30. In the following it is referred to the establishment of the communication connection by the pacemaker 10. If the communication connection is established by the external computer 30, it works analogously.

At first, a secure first communication channel 21 is established, for example by the communication unit 14 of the pacemaker 10 from the communication unit 14 of the pacemaker 10 to the communication unit 34 of the computer 30. If this first communication channel 21 is established, an end-to-end encrypted second communication channel 22 ensuring authenticity and confidentiality, for example by the processing unit 12 of the pacemaker 10 to the communication unit 34 of the computer 30 is established along a first section 22b and a second section 22a. The second section 22a extends between the processing unit 12 of the pacemaker 10 and the communication unit 14 of the pacemaker, i.e. within the pacemaker 10 along a wire. The first section 22b extends between the communication unit 14 of the pacemaker 10 and the communication unit 34 of the computer along a wireless connection and through the tunnel provided by the secure first communication channel 21. For example, the first communication channel 21 may use the known LTE (Long-Term Evolution) standard, whereas the second communication channel 22 uses the Ethernet standard along the second section 22a and the LTE standard along the first section 22b. The second communication channel 22 is provided such that it is relayed by the communication unit 14 of the pacemaker 10 in a way that only the protocol layers of the processing unit 12 are exposed for ensuring authenticity and confidentiality of the data transmitted between the processing unit 12 and the communication unit 34 of the computer 30.

The pacemaker 10 and the computer 30 may exchange data along the second communication channel 22, for example data stored in the NoSQL database 121 of the pacemaker 10, e.g. a Couchbase lite database, and/or data stored in the NoSQL database 301 of the computer 30, e.g. a Couchbase database.

Data exchange may comprise sending measured data of the pacemaker 10 from the processing unit 12, e.g. electrocardiogram data, to the communication unit 34 of the computer 30 (and receiving these data by the communication unit 34 of the computer 30) and/or sending request data from the communication unit 34 of the computer 30 to the processing unit 12 of the pacemaker via the communication unit 14 of the pacemaker 10. The request data may, for example, initiate to transmit measured data of the pacemaker 10 to the computer 30.

Fig. 1 further shows the communication based on the Open Systems Interconnection model (OSI model) with its 7 layers, the application layer 201, the presentation layer 202, the session layer 203, the transport layer 204, the network layer 205, the data link layer 206 and the physical layer 207. The application layer 201 may use HTTP, the presentation layer 202 TLS, the session layer 203 Socket, the transport layer 204 TCP, the network layer 205 IP, the data link layer 206 MAC and the physical layer 207 Ethernet. The encryption within the first communication channel 21 and within the second communication channel 22 may be provided in each case by the presentation layer 202.

## Claims

1. A medical device (10) comprising a processing unit (12) and a communication unit (14), wherein the communication unit (14) is configured to establish a secure first communication channel (21) to a communication unit (34) of an external device (30), wherein the processing unit (12) is configured to establish a second communication channel (22) having end-to-end-encryption ensuring authenticity and confidentiality to the communication unit (34) of the external device (30) via the communication unit (14) of the medical device, wherein the second communication channel (22) is provided within the first communication channel (21) along a first section (22b) of the second communication channel (22) extending from the communication unit (14) of the medical device to the communication unit (34) of the external device (30).

2. The medical device of claim 1, wherein a second section (22a) of the second communication channel (22) extending from the processing unit (12) to the communication unit (14) of the medical device is provided by wired media.

3. The medical device of any of the previous claims, wherein the first section (22b) of the second communication channel (22) and the first communication channel (21) is provided by wireless media.

4. The medical device of any of the previous claims, wherein the external device (30) is connected to or integrated within a computer, another medical device, a mobile phone, or a programmer.

5. The medical device of any of the previous claims, wherein the medical device is configured such that the data encryption of the first communication channel (21) and of the second communication channel (22) use different security means, e.g. different ciphers and/or different cipher TLS suites.

6. The medical device of any of the previous claims, wherein the communication along the first communication channel (21) and/or along the second communication channel (22) is a bidirectional communication.

7. The medical device of any of the previous claims, wherein the processing unit (12) and the communication unit (14) of the medical device have different operating systems.

8. The medical device of any of the previous claims, wherein the communication unit (14) of the medical device is configured to provide load balancing and/or protection against DOS attacks and/or intrusion prevention.

9. The medical device of any of the previous claims, wherein the communication unit (14) is mechanically connected to the medical device by a detachable connection.

10. A system comprising the medical device (10) of any of the previous claims and an external device (30), wherein the external device (30) comprises a communication unit (34) which is configured to establish a secure first communication channel (21) to a communication unit (14) of the medical device (10), wherein the communication unit (34) of the external device (30) is further configured to establish a second communication channel (22) having end-to-end-encryption ensuring authenticity and confidentiality to a processing unit (12) of the medical device (10) via the communication unit (14) of the medical device (10), wherein the second communication channel (22) is provided within the first communication channel (2) along a first section (22b) of the second communication channel (22) extending from the communication unit (14) of the medical device (10) to the communication unit (34) of the external device (30).

11. An operation method of a medical device (10), wherein the medical device comprises a processing unit (12) and a communication unit (14), comprising the following steps:
- establishing a secure first communication channel (21) to a communication unit (34) of an external device (30) by the communication unit (14) of the medical device,
- establishing a second communication channel (22) having end-to-end-encryption ensuring authenticity and confidentiality to the communication unit (34) of the external device (30) via the communication unit (14) of the medical device (10) by the processing unit (12) of the medical device (10), wherein the second communication channel (22) is provided within the first communication channel (21) along a first section (22b) of the second communication channel (22) extending from the communication unit (14) of the medical device (10) to the communication unit (34) of the external device (30),
- transmitting data from the processing unit (12) of the medical device (10) to the communication unit (34) of the external device (30) using the second communication channel (22).

12. An operation method of a system comprising a medical device (10) and an external device (30), wherein the medical device (10) comprises a processing unit (12) and a communication unit (14) and the external device (30) comprises a communication unit (34), wherein the method comprises the following steps:
- establishing a secure first communication channel (21) to the communication unit (14) of the medical device (10) by the communication unit (34) of the external device (30),
- establishing a second communication channel (22) having end-to-end-encryption ensuring authenticity and confidentiality to the processing unit (12) of the medical device (10) via the communication unit (14) of the medical device (10) by the communication unit (34) of the external device (30), wherein the second communication channel (22) is provided within the first communication channel (21) along a first section (22b) of the second communication channel (22) extending from the communication unit (34) of the external device (30) to the communication unit (14) of the medical device (10),
- transmitting data from the communication unit (34) of the external device (30) to the processing unit (12) of the medical device (10) using the second communication channel (22).

13. The operation method of any of the claims 11 and 12, wherein data encryption of the first communication channel (21) and of the second communication channel (22) is provided using different security means, e.g. different ciphers and/or different cipher TLS suites.

14. A computer program product comprising instructions which, when executed by a processor, cause the processor to perform the steps of the method according to any of the claims 11 to 13.

15. Computer readable data carrier storing a computer program product according to claim 14.
